# DEMANDE DE BREVET EUROPEEN

(11) **EP 3 656 635 A1**
(43) Date de publication de la demande: **27.05.2020**
(21) Numéro de dépôt: 19210535.1
(22) Date de dépôt: 21.11.2019
(51) Int. Cl.: B61D 35/00, G01F 23/00

(54) **DISPOSITIF DE SURVEILLANCE DE NIVEAU DE LIQUIDE DANS UN RÉSERVOIR DE WC DE VÉHICULE DE TRANSPORT PUBLIC**

(30) Priorité: 22.11.2018 FR 1871716
(71) Demandeur: SpeedInnov, 75008 Paris (FR)
(72) Inventeur: GUILLOTEAU, Emmanuel, 17440 AYTRE (FR)
(74) Mandataire: Lavoix

(57) **Abrégé**

Le dispositif (10) de surveillance comporte :
- un capteur continu (12, 12') de mesure de niveau de liquide, destiné à être logé dans le réservoir (2, 3),
- des premiers moyens (14) de transmission d'une information relative au niveau de liquide mesuré, depuis le capteur continu (12, 12') vers un système (16) de contrôle et de gestion du véhicule.

## Description

La présente invention concerne un dispositif de surveillance de niveau de liquide dans un réservoir de WC de véhicule de transport public, notamment de véhicule ferroviaire.

Plus particulièrement, un tel dispositif équipe par exemple un réservoir d'eau propre d'un WC de véhicule de transport public, et/ou un réservoir d'eaux usées de WC de véhicule de transport public.

On connait déjà, dans l'état de la technique, un dispositif de surveillance de niveau comportant des capteurs de niveau binaires, indiquant si le niveau d'eau atteint un niveau prédéfini ou non. Un tel dispositif comporte habituellement une indication de niveau à l'intérieur et/ou à l'extérieur du véhicule, indiquant si le niveau prédéfini est atteint ou non.

Dans le cas d'un réservoir d'eau propre, le capteur de niveau binaire est configuré pour mesurer si la quantité d'eau restant dans le réservoir est inférieure ou supérieure à 5% d'un niveau maximum.

Dans le cas d'un réservoir d'eaux usées, des capteurs de niveau binaires sont généralement configurés pour mesurer si la quantité d'eau dans le réservoir est inférieure à 70%, comprise entre 70% et 95%, ou supérieure à 95% et a minima 95%.

Avec un tel dispositif, il est nécessaire d'aller sur les trains pour connaitre l'état des réservoirs. Une fois les niveaux vérifiés, il est alors nécessaire de planifier les opérations de remplissage des réservoirs d'eau propre et/ou de vidange des réservoirs d'eaux usées.

Enfin, pour vérifier si les opérations de remplissage et/ou de vidange ont bien été réalisées, il est nécessaire de retourner sur le train.

Un tel dispositif connu n'est donc pas satisfaisant en termes d'opération de maintenance et d'immobilisation du véhicule.

L'invention a notamment pour but d'améliorer la situation, en proposant un dispositif de surveillance de niveau facilitant les opérations de maintenance.

A cet effet, l'invention a pour objet un dispositif de surveillance de niveau de liquide dans un réservoir de WC de véhicule de transport public, notamment de véhicule ferroviaire, caractérisé en ce que le dispositif de surveillance comporte :
- un capteur continu de mesure de niveau de liquide, destiné à être logé dans le réservoir,
- des premiers moyens de transmission d'une information relative au niveau de liquide mesuré, depuis le capteur continu vers un système de contrôle et de gestion du véhicule.

Le dispositif de surveillance selon l'invention permet de mieux anticiper les opérations de maintenance, notamment de planifier les opérations de maintenance avant que le véhicule n'arrive au dépôt. En particulier, les informations étant centralisées sur le système de contrôle et de gestion du véhicule, qui est commun à toutes les voitures du véhicule dans le cas d'un véhicule ferroviaire, il n'est pas nécessaire de se déplacer sur ce véhicule pour constater les niveaux d'eau.

Un dispositif de surveillance selon l'invention peut comporter en outre l'une ou plusieurs des caractéristiques suivantes, prises seules ou selon toutes combinaisons techniquement envisageables.
- Le dispositif de surveillance est dépourvu d'indicateur de niveau extérieur.
- Le dispositif de surveillance comporte au moins un capteur de niveau binaire additionnel, destiné à être logé dans le réservoir pour comparer le niveau avec un niveau prédéfini.
- Le dispositif de surveillance comporte des seconds moyens de transmission de l'information relative au niveau de liquide mesuré, depuis le système de contrôle et de gestion du véhicule vers un dispositif de réception extérieur.

L'invention concerne également un dispositif de WC de véhicule de transport public, comportant un réservoir d'eau propre et un réservoir d'eaux usées, caractérisé en ce qu'il comporte un dispositif de surveillance tel que défini précédemment, pour la surveillance des niveaux dans les réservoirs d'eau propre et d'eaux usées.

L'invention concerne également un procédé de surveillance d'au moins un réservoir de liquide équipé d'un dispositif de surveillance tel que défini précédemment, comportant les étapes suivantes :
- mesure régulière du niveau de liquide dans le réservoir,
- transmission régulière de l'information relative au niveau de liquide mesuré vers le système de contrôle et de gestion du véhicule.

Avantageusement, la transmission régulière est réalisée périodiquement.

De manière optionnelle, le procédé de surveillance comporte une étape d'interrogation du système de contrôle et de gestion du véhicule, suivi d'une étape de transmission de l'information relative au niveau de liquide mesuré, depuis le système de contrôle et de gestion du véhicule vers le dispositif de réception extérieur.

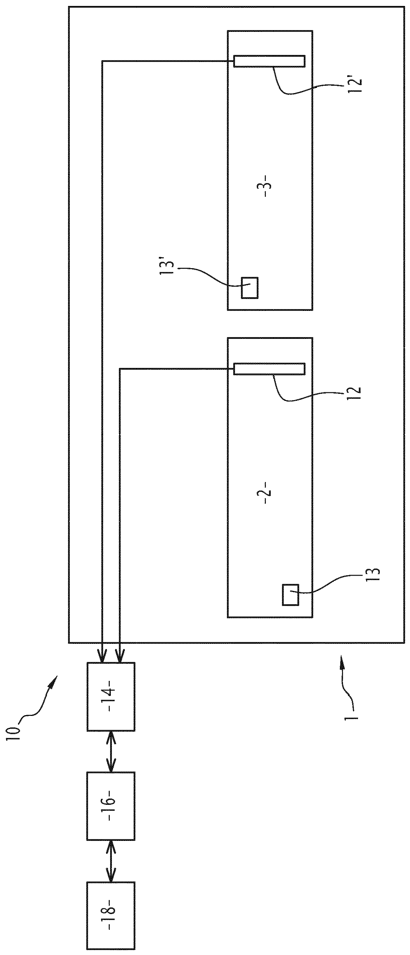

L'invention sera mieux comprise à la lecture de la description qui va suivre, donnée uniquement à titre d'exemple et faite en se référant à [Fig 1] la figure unique annexée représentant schématiquement un dispositif de surveillance selon un exemple de mode de réalisation de l'invention.

On a représenté, sur la figure, un dispositif 1 de WC de véhicule de transport public. Le véhicule de transport public est par exemple un véhicule ferroviaire ou un véhicule de transport routier, par exemple du type guidé.

Le dispositif de WC 1 comporte au moins un réservoir d'eau propre 2 et au moins un réservoir d'eaux usées 3. Le réservoir d'eau propre 2 est notamment destiné à alimenter un lavabo et/ou une chasse d'eau, et le réservoir d'eaux usées 3 est destiné à recevoir les effluents du lavabo ou d'un WC.

Le dispositif de WC 1 comporte un dispositif 10 de surveillance de niveau dans les réservoirs 2, 3. Il est en effet nécessaire de surveiller le niveau du réservoir d'eau propre 2, pour le réalimenter lorsque ce niveau est trop faible, et de surveiller le niveau du réservoir d'eaux usées 3, pour le vidanger lorsque ce niveau est trop élevé.

Le dispositif de surveillance 10 comporte, pour chaque réservoir 2, 3 un capteur de niveau continu 12, 12' destiné à mesurer le niveau de liquide dans ce réservoir. Un tel capteur de niveau continu mesure une valeur continue du niveau de liquide, et délivre un signal proportionnel au niveau de liquide dans le réservoir.

De manière optionnelle, chaque réservoir 2, 3 peut être équipé d'au moins un capteur de niveau binaire 13, 13' additionnel, logé dans le réservoir pour comparer le niveau avec un niveau prédéfini. Un tel capteur de niveau binaire 13, 13' indique si le niveau est supérieur ou inférieur au niveau prédéfini. Un tel capteur de niveau binaire 13, 13' a par exemple une fonction de redondance en cas de défaillance du capteur de niveau continu 12, 12'.

Le dispositif de surveillance 10 comporte par ailleurs des premiers moyens 14 de transmission d'une information relative au niveau de liquide mesuré, depuis le capteur continu 12, 12' vers un système 16 de contrôle et de gestion du véhicule. Un tel système 16 est appelé « système de contrôle et de gestion de train » dans le cas d'un véhicule ferroviaire, et dans ce cas généralement désigné par l'acronyme TCMS (pour «Train Control/Management System »).

Ainsi, les informations relatives aux niveaux de liquide mesuré sont stockées par le système de contrôle et de gestion 16, et peuvent être consultées à tout moment.

A cet effet, le dispositif de surveillance 10 comporte avantageusement des seconds moyens de transmission de l'information relative au niveau de liquide mesuré, depuis le système de contrôle et de gestion 16 vers un dispositif de réception extérieur 18.

Le dispositif de réception extérieur 18 peut interroger à tout moment le système de contrôle et de gestion 16 pour obtenir les niveaux de liquide, ce qui permet de planifier aisément les opérations de maintenance.

Il est à noter que le dispositif de surveillance 10 est de préférence dépourvu d'indicateur de niveau extérieur, un tel indicateur de niveau étant rendu inutile par l'invention.

Le dispositif de surveillance 10 selon l'invention permet de mettre en œuvre un procédé de surveillance qui va maintenant être décrit.

Le procédé de surveillance comporte une étape régulière de mesure du niveau de liquide dans chaque réservoir 2, 3. Cette étape peut être réalisée en continu, ou à intervalles réguliers.

Le procédé de surveillance comporte ensuite la transmission régulière de l'information relative au niveau de liquide mesuré vers le système de contrôle et de gestion 16 du véhicule. Cette transmission peut par exemple être réalisée en continu, ou en variante être réalisée périodiquement.

Les informations relatives aux niveaux de liquide sont stockées dans le système de gestion et de surveillance 16. Par exemple, les niveaux relevés sont datés, de manière à conserver un historique de l'évolution des niveaux de liquide.

Le procédé de surveillance comporte, à tout moment souhaité par un agent de maintenance, une étape d'interrogation du système de contrôle et de gestion 16, suivi d'une étape de transmission de l'information relative au niveau de liquide mesuré, depuis le système de contrôle et de gestion 16 vers le dispositif de réception extérieur 18.

Il est ainsi possible de planifier les opérations de maintenance sans nécessiter de se déplacer sur le véhicule.

Par ailleurs, les capteurs de niveau étant continus, il est possible d'anticiper les opérations de maintenance de manière plus fiable qu'avec des capteurs de niveau binaires. En particulier, on peut estimer, en fonction du niveau dans chaque réservoir, et du temps de trajet prévu pour le véhicule, s'il est nécessaire de procéder à l'opération de maintenance ou si le véhicule peut faire un ou plusieurs trajets avant l'opération de maintenance.

On notera que l'invention n'est pas limitée au mode de réalisation décrit, mais pourrait présenter diverses variantes complémentaires.

## Revendications

1. Dispositif (10) de surveillance de niveau de liquide dans un réservoir (2, 3) de WC de véhicule de transport public, notamment de véhicule ferroviaire, **caractérisé en ce que** le dispositif de surveillance (10) comporte :
- un capteur continu (12, 12') de mesure de niveau de liquide, destiné à être logé dans le réservoir (2, 3),
- des premiers moyens (14) de transmission d'une information relative au niveau de liquide mesuré, depuis le capteur continu (12, 12') vers un système (16) de contrôle et de gestion du véhicule.

2. Dispositif de surveillance (10) selon la revendication 1, dépourvu d'indicateur de niveau extérieur.

3. Dispositif de surveillance (10) selon la revendication 1 ou 2, comportant au moins un capteur de niveau binaire (13, 13') additionnel, destiné à être logé dans le réservoir (2, 3) pour comparer le niveau avec un niveau prédéfini.

4. Dispositif de surveillance (10) selon l'une quelconque des revendications précédentes, comportant des seconds moyens de transmission de l'information relative au niveau de liquide mesuré, depuis le système de contrôle et de gestion (16) du véhicule vers un dispositif de réception extérieur (18).

5. Dispositif (1) de WC de véhicule de transport public, comportant un réservoir d'eau propre (2) et un réservoir d'eaux usées (3), **caractérisé en ce qu'**il comporte un dispositif de surveillance (10) selon l'une quelconque des revendications précédentes, pour la surveillance des niveaux dans les réservoirs d'eau propre (2) et d'eaux usées (3).

6. Procédé de surveillance d'au moins un réservoir de liquide (2, 3) équipé d'un dispositif de surveillance (10) selon l'une quelconque des revendications 1 à 4, comportant les étapes suivantes :
- mesure régulière du niveau de liquide dans le réservoir (2, 3),
- transmission régulière de l'information relative au niveau de liquide mesuré vers le système de contrôle et de gestion (16) du véhicule.

7. Procédé de surveillance selon la revendication 6, dans lequel la transmission régulière est réalisée périodiquement.

8. Procédé de surveillance selon la revendication 6 ou 7, à l'aide d'un dispositif de surveillance selon la revendication 4, comportant une étape d'interrogation du système de contrôle et de gestion (16) du véhicule, suivi d'une étape de transmission de l'information relative au niveau de liquide mesuré, depuis le système de contrôle et de gestion (16) du véhicule vers le dispositif de réception extérieur (18).
